# EUROPEAN PATENT APPLICATION

(11) **EP 1 100 040 A2**
(43) Date of publication of application: **16.05.2001**
(21) Application number: 00309791.2
(22) Date of filing: 06.11.2000
(51) Int. Cl.: G06K 11/08

(54) **Optical digitizer using curved mirror**

(30) Priority: 11.11.1999 JP 32048299
(71) Applicant: Newcom Inc., Kuki-shi, Saitama 346-0002 (JP)
(72) Inventor: Ogawa, Yasuji, Kitakatsushika-gun, Saitama 349-1103 (JP)
(74) Representative: Hallybone, Huw George

(57) **Abstract**

An optical digitizer for detecting a position pointing coordinate of an instruction instrument (2,20) placed on a coordinate plane surface (1) includes a light source (24,31) to emit a light ray, an image taking device (13) arranged on the periphery of the coordinate plane surface for taking an image of the instruction instrument by using the light ray from the light source and for converting the image into an electric signal, and a computing device (7) for processing the converted electric signal from the image taking device and for computing the coordinates of the pointed position. The digitizer of the invention further includes a curved mirror (26,27) placed on a light path from the light source to the image taking device. The curved mirror (26,27) functions to widen the view field angle for taking an image by the image taking device. With less number of the image taking devices, the optical structure for the digitizer can be manufactured at a low cost and in a small size.

## Description

### BACKGROUND OF THE INVENTION

### (1) Field of the Invention

The present invention relates to a digitizer used for detecting the coordinates of a pointed position, pointed by a finger, a stylus or an instruction stick (hereinafter referred to as an instruction means) on a coordinate plane. In particular, it relates to an optical digitizer for detecting the position of the instruction means optically by an image sensor from a side of the coordinate plane, and inputting the detected positional information into a computer or the like.

### (2) Description of the Related Art

In recent years, mobile type pen input computers, such as the PDA, have become popular. Many of them are provided with a touch panel of a pressure sensitive resistance membrane system placed on top of a liquid crystal display (LCD). This allows a finger or a pen to touch or draw to operate the computer, or an input by a figure, so that a user can use the computer as if using it with a pen and a note. However, in the case of inputting a signature for signature verification, or using this system for a clinical chart for a patient which relies heavily on handwriting, if the user's hand touches the touch panel while making an input by a pen, which often happens while writing, it causes a wrong input to be made due to the inherent characteristics of the touch panel. This is called a hand-touch problem. In order to avoid this problem, the provision of a digitizer of an optical system is proposed to replace the touch panel of the pressure sensitive resistance membrane system.

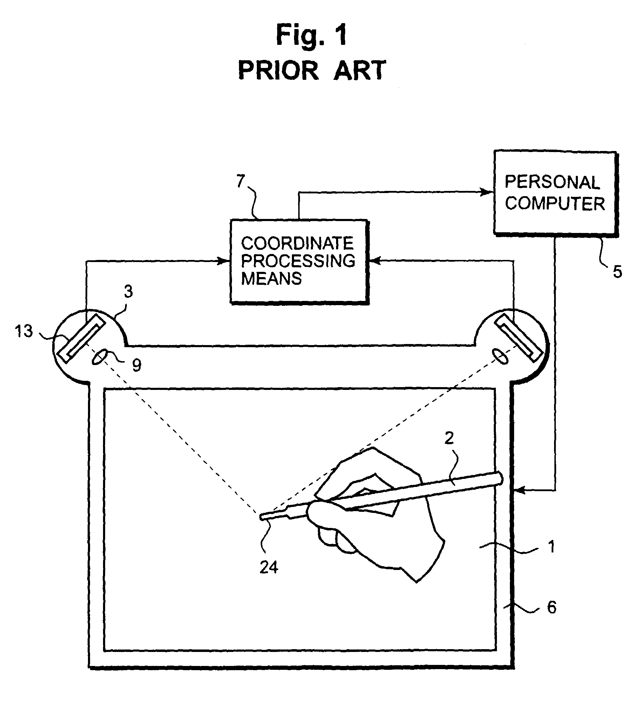

Fig. 1 shows an example of a conventional digitizer. A pen 2 is equipped with an infrared LED 24 at its tip. The image of the pen tip luminescent spot is then picked up from two angles by a pair of detecting units 3 on a coordinate plane 1. The detecting unit 3 is comprised of a lens 9 and a linear image sensor 13. The picked up images then are transformed into electric signals, and these signals are processed at a coordinate processing means 7 using the triangulation principle in order to detect the coordinate of the pen tip. In this case, a hand-touch on the panel is allowed as long as the hand is not intersecting the path between the pen tip and the image taking means. In the present example, the optical digitizer is further connected to a personal computer 5. The computer possesses a display device 6 to display computer output, wherein the display device 6 is arranged in such a way that the coordinate plane 1 and the display surface of the display device 6 coincide.

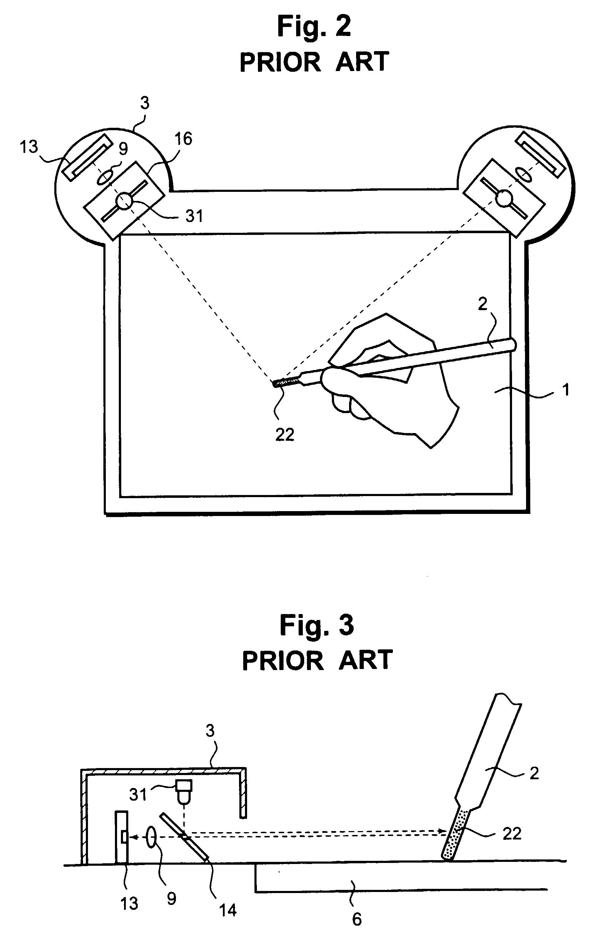

Other examples of conventional optical digitizers are shown in the plane view of Fig. 2 and the side view of Fig. 3. The detecting unit 3 is configured by adding a tunnel mirror 14 in front of the image formation lens 9 of the linear image sensor 13. They are arranged in such a way that the optical axis of the LED light source 31 and the optical axis of the linear image sensor 13 coincide. In this particular prior art, a tape made of the retroreflective material 22 is rolled around the tip of the pen 2. When a light ray irradiated from the LED light source 31 hits the retroreflective tape 22 at the tip of the pen 2, the light ray returns straight back, in accordance with the retroreflective characteristics, in the direction that the light ray came from. By picking up the image of this reflected light with the linear image sensor 13, it becomes possible to detect the position pointing coordinates of the pen. In this example of prior art, when compared to the other prior art shown in Fig. 1 wherein the pen itself possesses the light source, the pen does not require the electric segments such as a light source and an electric power source, hence the structure of the pen becomes simple.

In the conventional optical digitizer as shown in Fig. 1, the image taking means is arranged at the position near the apex angle, so the coordinate plane and image taking means are next to each other. This makes, this segment, physically extend out to the side in the actual mounting. In the case of an optical digitizer using the retroreflective means, as shown in Fig. 3, it requires configuration of the optical axis of the image taking means 13, which has a view field close to 90 degrees, and the light source 31 to coincide at a wide field angle, creating the problem of causing the actual mounting to be thick. This is a fatal problem in a portable type computer which requires a compact size.

In consideration of the aforementioned mounting problems in the prior art, the present invention proposes an optical digitizer capable of actually mounting the image taking means in a compact size. The invention further aims to reduce the number of image sensors in the detecting unit, which are expensive parts in the optical digitizer, thereby providing an economically efficient optical digitizer.

### SUMMARY OF THE INVENTION

In order to achieve the above mentioned objectives, to detect the coordinates of the pointed position indicated by the instruction means on the coordinate surface, the optical digitizer is comprised of a light source to emit a light ray, an image taking means, which is placed at the periphery of the coordinate plane, to pick up the image of the instruction means by using the light ray of the light source and covert it into an electric signal, a computing means to compute the coordinates of the pointed position based on the electric signal converted by the image taking means, and a curved mirror, placed between the light source and the image taking means, in order to widen the field angle of the image of the image taking means.

It is possible to use an elliptical mirror, an elliptical cylinder mirror, a hyperbolic mirror, a hyperbolic cylinder mirror and the like for the curved mirror.

The light source is located either at the instruction means itself or between the image taking means and the curved mirror, and by causing the light ray, which is emitted from the light source, to be reflected by the curved mirror, the field angle of the image taking means is widened.

The retroreflective material is located either at the instruction means itself or at the frame of the coordinate plane. By reflecting the reflected light from the retroreflective material by the curved mirror and sending it to the image taking means, the coordinates of the pointed position of the instruction means are detected.

It is possible that a pair of curved mirrors, or a pair of curved mirrors and the image taking means, are arranged in such a way that the directions of reflected light from the respective curved mirrors face each other. The image of the aforementioned instruction means is taken from different directions, and then the instruction means can be detected by either one image taking means or by two image taking means.

It is also possible for the optical digitizer of the present invention to have a display device to conduct display output, wherein the display device is arranged in such a way that the aforementioned coordinate plane and the display surface of the display device coincide.

### BRIEF DESCRIPTION OF THE DRAWINGS

The above and other objects, features and advantages of the present invention, will be apparent from the following descriptions of the preferred embodiments of the invention explained with reference to the accompanying drawings, in which:
Fig. 1 is a view showing an example of a conventional optical digitizer, which uses a light-emitting pen;
Fig. 2 is a view showing an example of a conventional optical digitizer, which uses a reflective type pen;
Fig. 3 is a side view showing an example of the conventional optical digitizer shown in Fig. 2, which uses a reflective type pen;
Fig. 4 is a plane view showing the optical digitizer in accordance with a first embodiment of the present invention;
Fig. 5 is a diagram showing the characteristics of the hyperbolic cylinder mirror, which is employed in the first embodiment shown in Fig. 4 in accordance with the present invention;
Fig. 6 is a diagram showing the configuration of the imaging lens used for the optical digitizer shown in Fig. 4 in accordance with the first embodiment of the present invention;
Fig. 7 is a plane view showing the optical digitizer in accordance with a second embodiment of the present invention;
Fig. 8 is a side view showing the optical digitizer in accordance with the second embodiment of the present invention;
Fig. 9 is a view showing the characteristics of the elliptical cylinder mirror, which is employed in the second embodiment shown in Fig. 7 in accordance with the present invention;
Fig. 10 is a view showing the configuration of the imaging lens used for the optical digitizer of the second embodiment shown in Fig. 7 in accordance with the present invention;
Fig. 11 is a plane view showing the optical digitizer in accordance with a third embodiment of the present invention;
Fig. 12 is a plane view showing the optical digitizer in accordance with a fourth embodiment of the present invention;
Fig. 13 is a plane view showing the optical digitizer in accordance with a fifth embodiment of the present invention;
Fig. 14 is a plane view showing the optical digitizer in accordance with a sixth embodiment of the present invention; and
Fig. 15 is a sectional view for describing the combined mirror, which is employed in the optical digitizer of the sixth embodiment shown in Fig. 14 in accordance with the present invention.

### DESCRIPTION OF THE PREFERRED EMBODIMENTS

Reference will now be made in detail to the preferred embodiments of the present invention, examples of which are illustrated in the accompanying drawings.

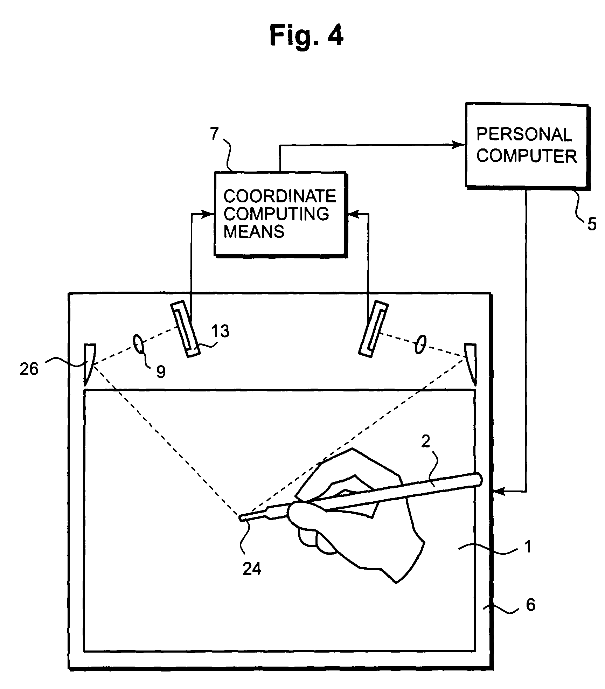

Fig. 4 is a plane diagram schematically showing the first embodiment of the optical digitizer in accordance with the present invention. Curved mirrors 26 are arranged on the right and left sides of the center of the coordinate plane 1 in such a way that the orientations of the reflected light from the curved mirrors 26 are opposed to each other, as shown in the diagram. For the present embodiment, the hyperbolic cylinder mirror is used as the curved mirror. On the coordinate plane 1, the emitted light from the light emitting segment at the tip of the pen 2, in this example, the infrared light, is reflected by the hyperbolic mirror 26, and is incident on the image taking segment composed of the lens 9 and the linear image sensor 13. Here, by the reflective characteristics of the hyperbolic cylinder mirror 26, the view field angle of the linear image sensor 13 is widened. The image of the pen 2 is taken from the two directions by the respective linear image sensors 13, the respective images of the light emitting segment 24 of the tip of the pen 2 imaged by the lenses 9 are converted to the electric signals by the linear image sensors 13 respectively, and based on these image signals from two directions, the two dimensional coordinates (X, Y) of the pen 2 are determined through the triangular principle computed by the microprocessor in the coordinate computing means 7. Thus, by using the curved mirror, which can widen the field angle of the linear image sensor, the linear image sensor is allowed to be folded back toward the inside and, accordingly, the image taking segment can be mounted in a compact size without extending out from the side unlike in the prior art.

Furthermore, in the example of Fig. 4, the coordinate computing means 7 is connected to the personal computer 5, equipped with the display device 6 to display the computer output, and the display device 6 is arranged in such a way that the coordinate plane 1 and the display surface of the display device 6 coincide. In this way, it becomes possible to use the optical digitizer to write letters directly on top of the display surface, so that it can be used by a doctor to display the medical record of a patient on the display screen and make a handwriting input with a pen.

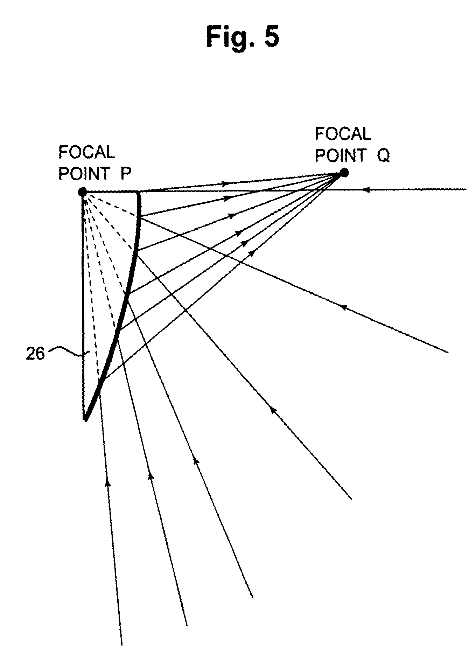

Fig. 5 illustrates a diagram to show the reflective characteristics of the hyperbolic mirror 26, which is used in the first embodiment of the optical digitizer shown in Fig. 4 in accordance with the present invention. The characteristics of the hyperbolic mirror, as shown in Fig. 5, are that the light beams heading for the focus point P reflect off from the curved surface and advance towards another focus point Q, so that by placing a lens at the focus point Q for imaging at the image sensor, it becomes possible to detect the angle of the light beam heading for the focus point P. In other words, it is possible that the view field angle of the image taking segment is widened by the hyperbolic mirror, allowing the image of the light beam to be taken from the coordinate plane which is folded back toward the inside with the image taking segment, so that the image taking segment can be mounted in a very compact way compared to the prior art. In the case of the present embodiment, the detection of the coordinates is of two dimensional, so that the cylinder mirror is sufficient, but in the case of detecting three-dimensional coordinates, it is preferred to have a mirror whose revolved section becomes a hyperbolic curve. In this case, an area image sensor can be employed for the image sensor. Furthermore, the curved mirror is not limited to the hyperbolic mirror, and a concave surface mirror, a convex surface mirror, a concave surface cylinder mirror, a convex surface cylinder mirror, and the like may well be used.

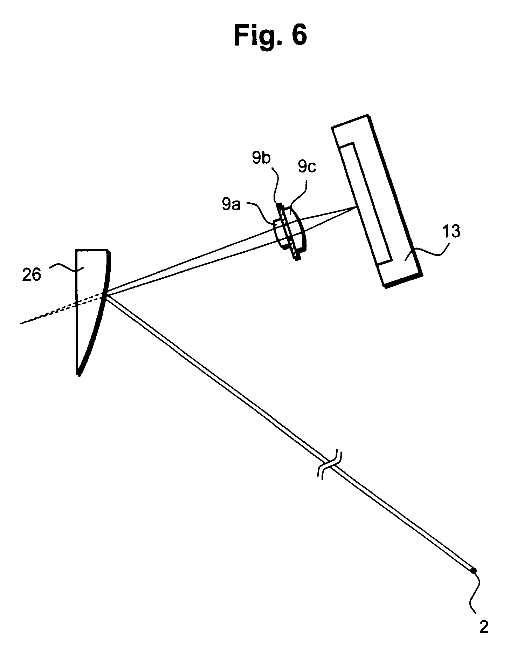

In the case where a hyperbolic cylinder mirror is used, if a regular convex lens is used for the imaging lens 9, the horizontal level focal point gets blurred. This is because the hyperbolic cylinder mirror acts like a concave cylinder lens with a short focal point. To cope with this problem, an aperture with a slit, which is narrow in the horizontal direction and long in the vertical direction, can be installed in order to deepen the focal depth in the horizontal direction. Furthermore, it is also possible to correct the blurred focal point in the horizontal direction by configuring the imaging lens with a convex cylinder lens 9a, an aperture 9b and a convex lens 9c as shown in Fig. 6.

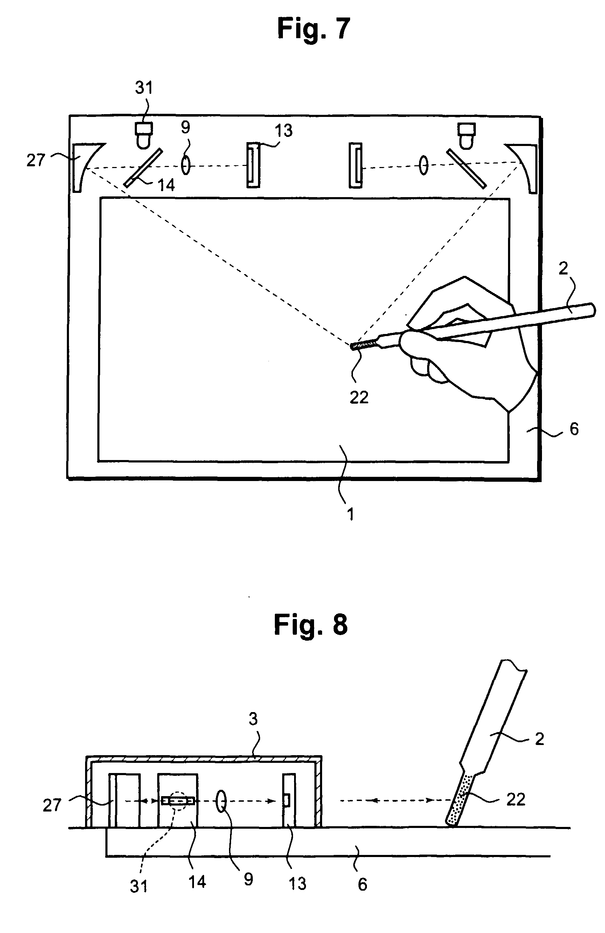

Fig. 7 is a plane view showing the second embodiment of the optical digitizer in accordance with the present invention. In this embodiment, the retroreflective material 22 is installed at the tip of the pen 2. The LED 31 is arranged in such a way that its light axis is coincided with the light axis of the image taking segment by using the tunnel mirror 14. These are placed on the right and left of the center of the coordinate plane 1 as shown in the diagram. The light beam emitted from the LED 31 is reflected by the tunnel mirror 14 and incident on the curved mirror 27. In the present embodiment, an elliptic cylinder mirror is used as a curved mirror to widen the field angle of the light rays. The field angle of the light rays is widened by the elliptic cylinder mirror 27, and the light rays go over the coordinate plane 1. The light rays incident on the retroreflective material 22 installed on the tip of the pen 2 on the coordinate plane 1, is reflected in the direction exactly the same as the direction for the incidence because of its retroreflective characteristics. The returned light ray reflected from the pen 2 goes into the elliptic cylinder mirror 27, goes through the tunnel mirror 14, and makes an image at the linear image sensor 13 by the lens 9. The images of the pen 2 from both the right and left directions are converted to electric signals by the respective linear image sensors 13, and from these image signals of the right and left, the 2D coordinates (X, Y) of the pen 2 are determined by using the triangulation principle. Though, in the present embodiment, the light axis of the light source and the image taking segment are coincided by using the tunnel mirror, it is not limited to this. For example, a half mirror, a pinhole, or the like can be used, or it is possible to arrange the light source and the image taking segment to be very close to each other. In this embodiment, as in the case of the first embodiment, it is also possible to install the display device 6.

Fig. 8 is a partial sectional view seen from the side of the optical digitizer shown in Fig. 7. As can be seen by comparing with the prior art shown in Fig. 2, in the prior art the LED as the light source should have been placed above the coordinate plane, i.e., in a vertical direction, as shown in Fig. 2 in order to match the light axis where the field angle is wide, so that a sufficient height for the detecting unit 3 was unavoidably necessary. If the LED is placed in the horizontal direction, the field angle of the image taking segment will become narrow, and causes the coordinate plane become narrow. The present invention, however, allows the LED to be placed in the horizontal direction since the field angle can be widened by the use of the curved mirror. Consequently, as shown in Fig. 8, the thickness of the detecting unit 3 can be very thin. Since the curved mirror widens the field angle towards the coordinate plane, the coordinate plane will not become narrow.

In the case of the optical digitizer with a wide coordinate plane, the prior art required the use of a special type light source which can emit the light rays with a wide angle, which was expensive. The present invention, however, allows the use of an inexpensive LED which is commercially available as a general purpose one and the emitted light rays therefrom can be widened to the desired field angle by the curved mirror, so that the device itself can be manufactured at an inexpensive cost.

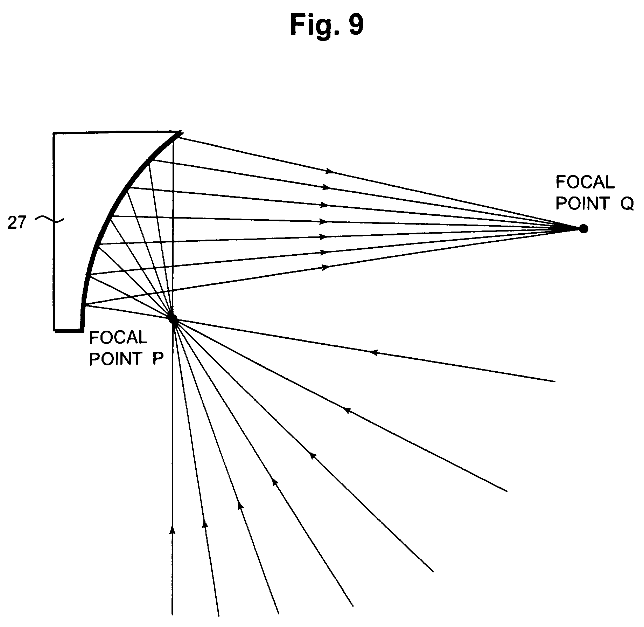

Fig. 9 is a pattern diagram showing the retroreflective characteristics of the elliptic cylinder mirror shown in Fig. 8. As shown in the diagram, the light ray, which is headed for the focal point P, is reflected and is then headed for another focal point Q, so that the equivalent effect as if it were using the hyperbolic cylinder mirror shown in Fig. 5 can be gained.

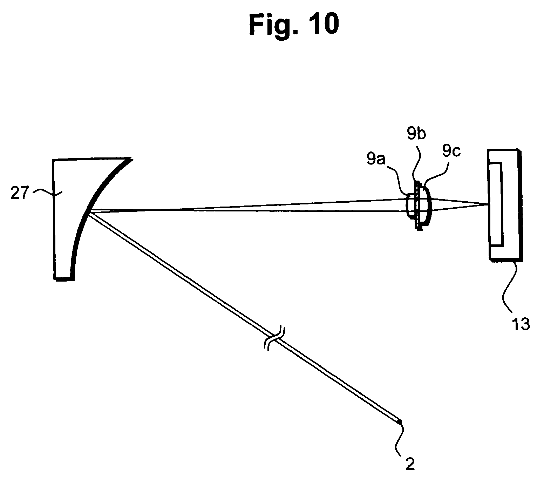

In the case where an elliptic cylinder mirror is used, if a regular convex lens is used for the imaging lens 9, the horizontal level focal point gets blurred. This is because the elliptic cylinder mirror acts like a convex cylinder lens with a short focal point. To cope with this problem, an aperture with a slit, which is narrow in the horizontal direction and long in the vertical direction, can be installed in order to deepen the focal depth in the horizontal direction. Furthermore, it is also possible to correct the blurred focal point in the horizontal direction by configuring the imaging lens with a convex cylinder lens 9a, an aperture 9b and a convex lens 9c as shown in Fig. 10.

Though the present embodiment uses the curved mirror as the elliptic cylinder mirror, it is not limited to the curved mirror. As with the first embodiment, the hyperbolic cylinder mirror can also be used. The curved mirror in accordance with the present invention is like the hyperbolic mirror or the elliptic mirror. By using a mirror which has a characteristic of fixing the focal point to two points, calculation is easily allowed of the imaging position for the instruction means. It is not limited to such a mirror, and a concave mirror, a convex mirror, a concave cylinder mirror, a convex cylinder mirror and the like which varies its focal point can be used as well. As the preferred embodiment in accordance with the present invention, the one, which uses the elliptic cylinder mirror as the curved mirror, is illustrated and explained here, but other curved mirrors can be used as well.

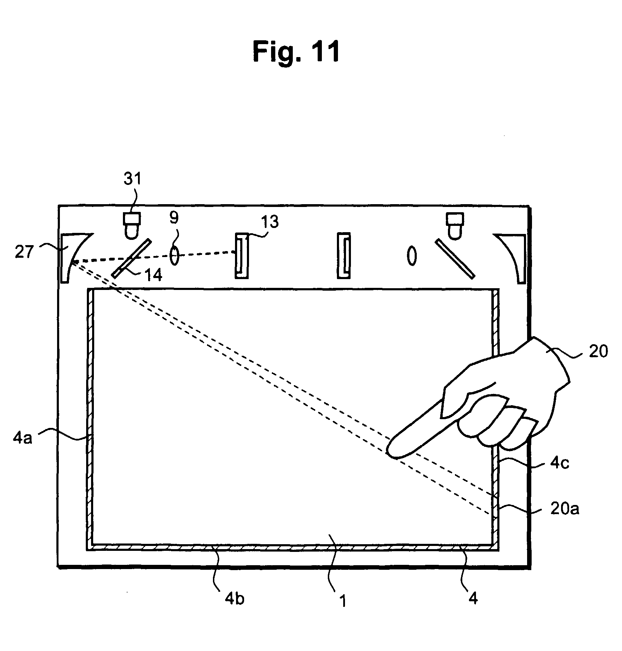

Fig. 11 is a plane view showing a typical configuration of the third embodiment of the optical digitizer in accordance with the present invention. This embodiment is for the optical digitizer which detects the position pointing coordinates of the instruction means 20, and yet does not possess any specific function in itself such as a finger, an instruction stick, or the like. In this embodiment, in place of the retroreflective material installed at the tip of the pen tip 2 in accordance with the second embodiment, a frame comprised of the retroreflective material 4 is installed around the coordinate plane 1. In this case, an image of the retroreflective material 4, which is located on two sides of the coordinate plane 1, is portrayed at each of the right and left image sensors 13. In other words, for the right side image sensor, the images of the retroreflective material 4a and 4b, and for the left side image sensor, the images of the retroreflective material 4b and 4c are picked up via the curved mirrors, which widen the field angle of the image sensors. When an instruction means 20 such as a finger or the like is placed on the coordinate plane 1, the reflected light ray from the retroreflective material 4 is blocked by the instruction means 20, allowing the image of the shadow 20a to be detected by the image sensor 13, so that the position pointing coordinates of the instruction means 20 can be detected. By this configuration, the so-called touch panel system can be realized. In this kind of touch panel system, by the use of the curved mirror 27, a lens 9, a tunnel mirror 14, an image sensor 13 and the like can be arranged in such a way to fold back the light rays, so that the image taking segment in accordance with the present invention can be mounted in a very compact size, for example, by placing it within the housing of the existing display device.

To solve the so-called hand-touch problem in this embodiment, the width of the shadow image 20a can be taken into consideration. Namely, when the width of the shadow image is narrow, it can be judged as a finger or a stick for input processing, and if the width of the shadow image is wider than a predetermined size, it can be judged as a hand-touch, so that the input processing will not be conducted.

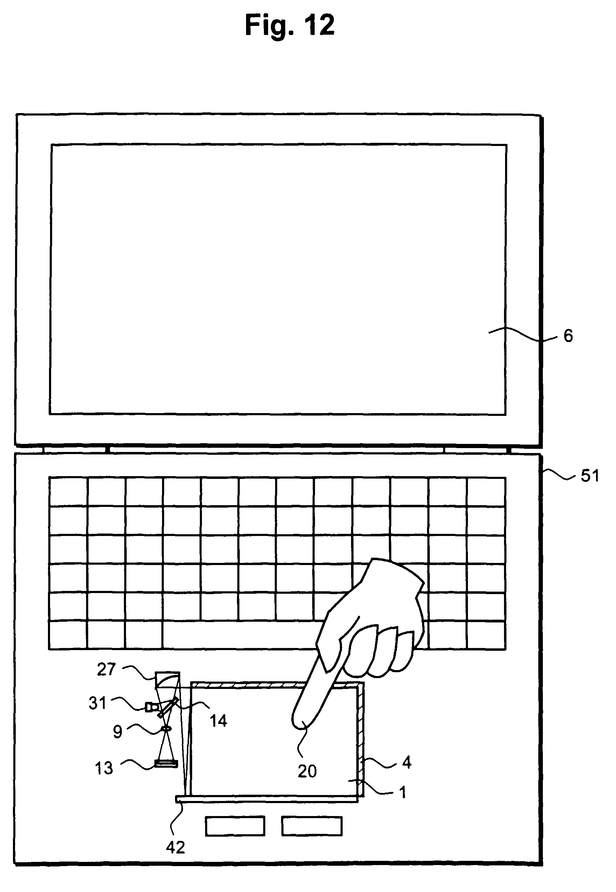

Fig. 12 is a plane view showing a typical configuration of a fourth embodiment of the optical digitizer in accordance with the present invention. The optical digitizer in accordance with the present invention can be made compact by using a curved mirror, thereby making it possible to incorporate the system in a notebook type personal computer 51 as shown in Fig. 12. It is possible to use the third embodiment for this case. In this embodiment, however, through the method of folding back at the plane mirror 42, the LED 31, the tunnel mirror 14, the lens 9, the image taking segment comprised of the linear image sensor 13 and the curved mirror 27 are made into one component. A light ray emitted from the LED 31 is reflected at the tunnel mirror 14, its field view angle is widened by the curved mirror 27, and then incident on the coordinate plane 1. This light ray is folded back by the plane mirror 42 and is incident on the retroreflective material 4, then returns in the direction in which the incident ray came from by the retroreflective characteristic. The returned light ray, which is once again reflected at the plane mirror 42, is then picked up at the linear image sensor 13 by the lens 9. In the case where an instruction means 20 such as a finger is placed on the coordinate plane 1, the position pointing coordinates of the instruction means 20 are detected with the triangulation principle from the shadows created by the light ray emitted from the LED 31 and by the light ray folded back at the plane mirror 42. By configuring the device in this manner, the system can be mounted even more compactly with fewer items, thereby allowing the manufacture of the product to be less expensive. This embodiment can improve the operability of a touch panel in accordance with the prior art electrostatic method incorporated in a notebook type personal computer, wherein an input cannot be made smoothly when operated by a dry finger. This embodiment also makes an input by a means other than a finger possible, such as a signature input and a handwriting input by a pen. It is possible to make the coordinate plane 1 with a hard material plate, so that even if it is operated with a pen which has a sharp tip, unlike the pad used for the pressure sensitive resistance membrane system, the plate will not be torn.

Though the embodiment shown in Fig. 12 has the optical digitizer in accordance with the present invention mounted in the so-called arm-rest area of the notebook type personal computer 51, it is also possible to mount the optical digitizer in accordance with the present invention in the frame area of the display device 6, since it can be made compact by using a curved mirror, thereby allowing operation with a finger or the like directly on top of the display screen. In the case of the prior art as shown in Fig. 1, the optical digitizer extends over the frame area of the display device 6, making it unsuitable for the notebook type personal computer. The optical digitizer in accordance with the present invention, however, can be mounted without enlarging the housing, so that it can fit a personal computer as a space saving design.

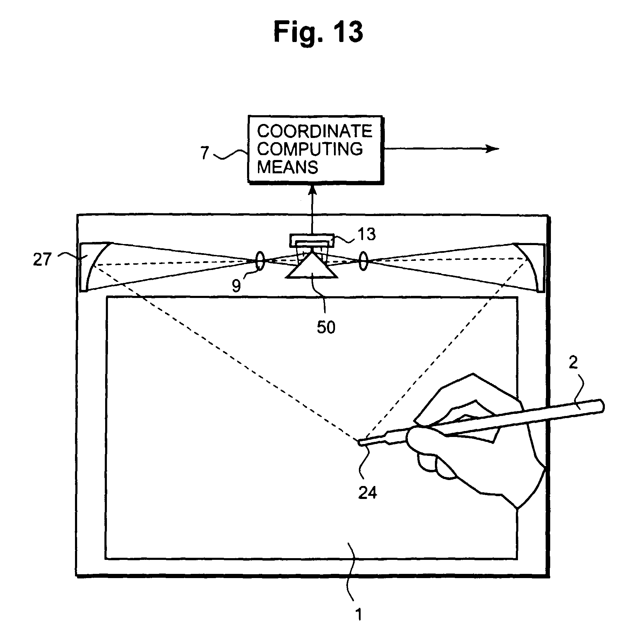

Fig. 13 is a plane view of a typical configuration of a fifth embodiment of the optical digitizer in accordance with the present invention. This embodiment is intended to reduce the cost greatly by reducing the number of linear image sensors which are relatively expensive items. The light rays emitted from the light emitting segment 24 installed at the tip of the pen 2 are reflected by the curved mirrors 27 positioned both in the right and the left in order to widen the field view angles of the image taking segments, thus forming images by the lenses 9 respectively, and are incident on the combined mirror 50. The combined mirror 50 is arranged in such a way as to shift the position so that the images from two directions will not overlap on the image forming plane of the linear image sensor 13. In other words, as shown in the diagram, the combined mirror 50 is arranged in such a way as to have the left side image form an image in the left half of the linear image sensor, and the right side image form an image in the right half of the same linear image sensor. The image taken from the two directions is converted to an electric signal as the combined image signal of right and left by the linear image sensor 13. This signal is analyzed at the coordinate computing means 7 by using the triangulation principle for its computing operation, thereby the position pointing coordinates of the pen 2 can be detected. Since the linear image sensor is divided into half to capture the image from right and left, its resolution becomes half. However, the number of the linear sensors can be reduced, allowing for a substantial cost reduction of the entire system, as well as allowing the size to be even more compact due to the decreased number of the linear image sensors. The present invention allows the position of the linear image sensor to be folded back inwardly by the curved mirror, so that the sharing of the linear image sensor for taking the images from the right and left, which was impossible in the prior art, has become possible.

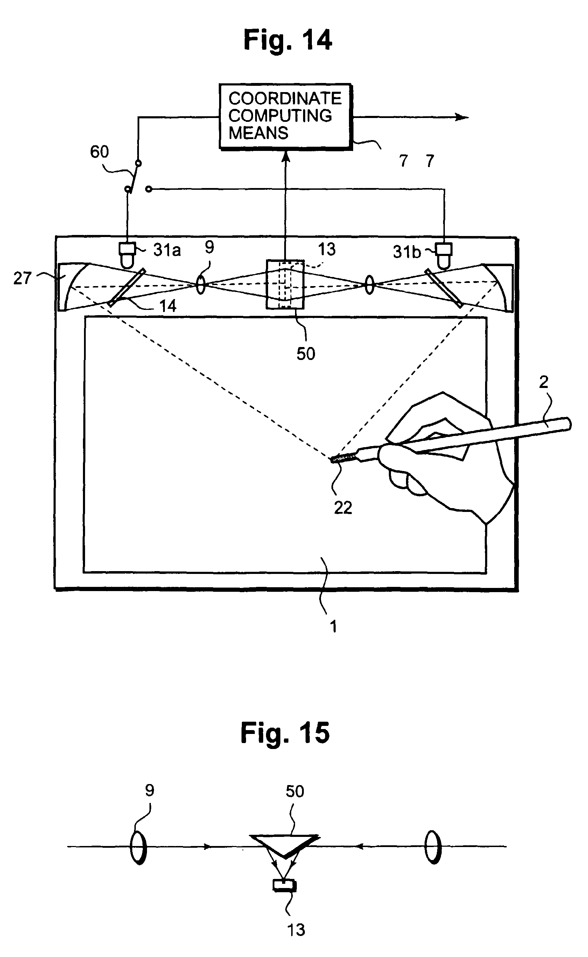

Fig. 14 is a plane view showing a typical configuration of a sixth embodiment of the optical digitizer in accordance with the present invention. This embodiment also intends to reduce the number of the linear image sensors, thereby reducing the cost of the entire system. Unlike the fifth embodiment, however, this embodiment does not divide the image forming plane of one linear image sensor into two; instead, this embodiment allows the resolution of the linear image sensor to be utilized fully. The LED 31, the tunnel mirror 14, the curved mirror 27 and the lens 9 are arranged on both the right and left sides as shown in Fig. 14, and the LEDs of the right and left are alternately caused to emit light by a lighting switchover device 60. For example, by the lighting switchover device 60, the left side LED 31a is first caused to emit the light. The light ray emitted from the left side LED 31a is reflected at the tunnel mirror 14, and its field view angle is widened by the curved mirror 27, and is incident on the surface of the coordinate plane 1. The light ray incident on the retroreflective material installed at the tip of the pen 2 returns in the same direction as that of the incident light ray by the retroreflective characteristic, is reflected by the combined mirror 50 via lens 9, and forms an image on the image forming plane of the linear image sensor 13. The image taken from the left side in this way is converted to an electric signal, and inputted into the coordinate computing means 7 as the left side signal. Next, the LED for emitting light is switched to the right side LED 31b by the lighting switchover device 60, and in the same manner, through the light ray emitted from the right LED 31b, the image is taken by the linear image sensor 13, which is converted to the electric signal and inputted into the coordinate computing means 7 as the right side signal. The above processes are repeated at a high speed, and detection of the images of the right and the left is effected alternately by one image taking means. Then, the operational process using the triangulation principle is conducted to gain the position pointing coordinates of the pen 2. Here, the lighting switchover device 60 is connected to the coordinate computing means 7 which is capable of detecting as to whether the signal inputted thereto is based on the right LED or the left LED.

Through this configuration, the resolution of the linear image sensor is fully utilized, and at the same time the number of the linear image sensors can be reduced, thereby allowing the cost to be reduced greatly, and the entire system to be more compact with less number of the linear image sensors.

Fig. 15 is a sectional view of the surrounding area of the combined mirror of the sixth embodiment shown in Fig. 14. As illustrated, the components are configured in such a way that each of the right and the left image is formed by each lens 9, is refracted by the combined mirror 50, and is incident on the linear image sensor 13. By causing the right and left LEDs 31 to emit the light alternately through the lighting switchover device, the images of the right and left can be detected separately by one linear image sensor 13.

As has been explained hereinabove, the present invention allows the installation position of the image taking means not to extend out to the side of the coordinate plane and in a compact manner because the light rays can be folded back by the curved mirror. Further, in the case of the optical digitizer which uses the retroreflective means, the field view angle may be widened by the curved mirror, thereby enabling the image taking means and the light source to be installed at desired locations, thus enabling the provision of a thin-type optical digitizer. In this case, the curved mirror may widen the light rays, so that a commercially available LED may be used. Consequently, it has become possible for the system to be manufactured at a low cost. Furthermore, in the case of the optical digitizer which takes an image from two different directions, wherein prior art required two image sensors, the present invention enabled one image sensor to take the images from two directions, thereby enabling the manufacturing of the system at low cost. These effects have been gained in the same manner in the case of the optical digitizer, which is equipped with an internal display system.

It is to be understood that the optical digitizer of this invention is not limited to the preferred embodiments and modifications described above.

## Claims

1. An optical digitizer for detecting a position pointing coordinate of an instruction instrument (2,20) placed on a coordinate plane surface (1), said optical digitizer characterized by comprising:
a light source (24,31) for emitting a light ray;
an image taking means (13), which is arranged on the periphery of said coordinate plane surface, for taking an image of said instruction instrument by using the light ray of said light source, and for converting the image into an electric signal;
an image forming lens (9) for forming an image on said image taking means;
a computing means (7) for computing the position pointing coordinate by processing said electric signal converted by said image taking means; and
a curved mirror (26,27), which is arranged in a light path between said light source and said image taking means, for widening the view field of the image taking of said image taking means.

2. An optical digitizer as claimed in claim 1, wherein said curved mirror (26,27) is any one of a concave mirror, a convex mirror, a concave cylinder mirror, and a convex cylinder mirror.

3. An optical digitizer as claimed in claim 2, wherein said curved mirror (26,27) is any one of an elliptic mirror, an elliptic cylinder mirror, a hyperbolic mirror, and a hyperbolic cylinder mirror.

4. An optical digitizer as claimed in any one of claims 1 through 3, wherein said image taking means (13) is either a linear image sensor or an area image sensor.

5. An optical digitizer as claimed in any one of claims 1 through 4, wherein said instruction instrument (2) possesses said light source (24), and wherein a light ray emitted from said light source is reflected at said curved mirror (26) which is for widening the view field of said image taking means (13), and is incident on said image taking means, whereby the image of said instruction instrument is taken.

6. An optical digitizer as claimed in any one of claims 1 through 4, wherein said light source (31) is located between said image taking means (13) and said curved mirror (27), and wherein the light ray emitted from said light source is reflected at said curved mirror which is for widening the view field of said image taking means, and then enters in said coordinate plane surface (1).

7. An optical digitizer as claimed in claim 6, wherein said instruction instrument (2) possesses a retroreflective material (22), and wherein a reflected light from said retroreflective material is reflected at said curved mirror (27), and then is incident on said image taking means (13).

8. An optical digitizer as claimed in claim 6, wherein said coordinate plane surface (1) possesses a retroreflective material (4a,4b,4c) at its frame portion, and wherein a reflected light from said retroreflective material is reflected at said curved mirror (27) and then incident on said image taking means (13).

9. An optical digitizer as claimed in any one of claims 1 through 8, wherein a pair of components each comprising of said curved mirror (26,27) and said image taking means (13) are placed with said coordinate plane surface (1) being in the center in such a manner that the directions of the reflected light rays from the respective curved mirrors are opposed to each other, and wherein said image taking means (13) take the images of said instruction instrument from different directions, then output electric signals which indicate linear images of said instruction instrument from different directions, and said computing means (7) computes the two dimensional position pointing coordinates of the instruction instrument based on said linear images.

10. An optical digitizer as claimed in any one of claims 1 through 8, wherein a pair of said curved mirrors (27) are placed with said coordinate plane surface (1) being in the center in such a manner that the directions of the reflected light from the respective curved mirrors are opposed to each other, and wherein said digitizer further comprises a combined mirror (50), which is to form each image of said instruction instrument (2) taken from different directions in such a manner as not to overlap each other but to form images at staggered locations, and said respective images are simultaneously detected by one image taking means (13).

11. An optical digitizer as claimed in any one of claims 1 through 8, wherein a pair of said curved mirrors (27) are placed with the coordinate plane surface (1) being in the center in such a manner that the reflected light rays from the respective curved mirrors are opposed to each other, and wherein said optical digitizer further comprises a combined mirror (50) in order to form on an image forming surface of one image taking means (13) an image based on the images of said instruction instrument taken from different directions, said light sources (31a,31b) are placed between said pair of curved mirrors (27) and said image taking means (13) respectively, and said respective light sources emit a light ray alternately whereby each said image is alternately detected by said one image taking means (13).

12. An optical digitizer as claimed in any one of claims 1 through 11, wherein said optical digitizer further comprises a display device (6) for an output display, said display device being arranged in such a manner that said coordinate plane surface and a display surface of said display device coincide.

13. An optical digitizer as claimed in any one of claims 1 through 12, wherein said image forming lens (9) is comprised of a convex lens and a slit which is narrow in the horizontal direction and long in the vertical direction in order to make the focal depth in the horizontal direction deep.

14. An optical digitizer as claimed in any one of claims 1 through 12, wherein said image forming lens (9 comprises a convex cylinder lens (9a), an aperture (9b) and a convex lens (9c) in order to improve the image forming characteristics in the horizontal direction.
